# EUROPEAN PATENT APPLICATION

(11) **EP 2 725 752 A1**
(43) Date of publication of application: **30.04.2014**
(21) Application number: 12290372.7
(22) Date of filing: 29.10.2012
(51) Int. Cl.: H04L 12/801

(54) **Method and apparatus for network congestion prediction**

(71) Applicant: Alcatel Lucent, 75007 Paris (FR)
(72) Inventor: Rössler, Horst, 70794 Filderstadt (DE); Derakhshan, Fariborz, 90491 Nürnberg (DE)
(74) Representative: Richardt Patentanwälte PartG mbB

(57) **Abstract**

The invention relates to a method for forwarding a data flow (210) in a computer network (100) while avoiding a congestion along a flow path, prior to the emergence of the congestion, wherein the data flow is defined as a sequence of data packets with the same destination address (120), the network comprising a plurality of network links (108), the flow path comprising a subset of the plurality of network links.

## Description

### Field of the invention

The present invention relates to computer networks and congestion handling.

### Background and related art

An effective technique for dealing with network congestions is important for providing efficient routing in computer networks and for high elasticity of a network in regard to cloud computing. Some known techniques for detecting congestion rely on measuring the delays occurring during packet transmission.

Congestions may be determined locally and thus re-routing of packages and data flows might become necessary if a previously determined transmission path turns out to include congested network links. Since such congestion, if not detected until the packet transmission has been started, may render a whole end-to-end path including multiple network domains obsolete, local congestion detection may subsequently lead to a waste of resources and path computation efforts.

### Summary of the invention

Various embodiments provide a technique to cope efficiently with network congestion without wasting computation time and network resources.

In particular, some embodiments provide a method for forwarding a data flow in a computer network while avoiding congestion along a flow path prior to the emergence of said congestion.

The network comprises a plurality of network elements connected with for example glass fiber cables, wherein said connections are from now on being called "links". Congestion may be perceived as a transgression of the remaining bandwidth of a network link by at least one data flow or data packet. A data flow is herein defined as a sequence of data packets with the same destination address. The sequence of network elements a data flow has to pass through to reach its destination address is called flow path and comprises a subset of said plurality of network elements.

In a first method step of some embodiments, a plurality of link capacity usage and data flow statistics is determined. Statistics may be determined by any suitable method such as by locally determining the statics based on received data or by receiving the statistics from another entity (e.g., a network element). In some embodiments, these statistics may comprise: the number of current data flows, their link capacity usage and other data characterizing the current and recent load status of the network links. It should be appreciated that statistics may be determined by an apparatus within the network such as one of the network elements themselves or by an apparatus outside the network element such as a network surveillance apparatus being logically connected to the network elements.

On the basis of these statistics a forecast of impending congestions of a network link may be conducted by estimating the time a next data flow arrives and further estimating the total link capacity usage of the data flows current in the link at the time the next flow is assumed to arrive. Since the maximum capacity of the link is well known one may determine the available link capacity at the previously estimated time the next data flow will arrive and compare this free link capacity with an average link capacity usage per data flow. If this average link capacity usage per data flow is greater than the free link capacity at the estimated time of arrival of the next data flow the link will most likely be congested by the next data flow. Thus the link may be flagged as endangered to suffer congestion prior to the arrival of the next data flow.

Since the endangered network links are known one may determine a path only comprising links without a previously forecasted impending congestion and direct the next data flow along said path. This may have the advantage that no computation resources are wasted, since the network elements of the flow path will most likely not suffer congestion and therefore re-routing of the data flow will not be necessary.

Forecasting congestion as well as determination of a flow path without forecasted impending congestions may for example be carried out by a control plane within a network element. One may also forward the link capacity usage and data flow statistics to external entities which may carry out the congestion forecast and path determination using the received data.

Furthermore one may also divide the tasks of congestion forecast on the one hand and path determination on the other hand between a plurality of entities that are able to communicate with each other. Thus an entity only has to forecast congestion on the basis of link capacity usage and data flow statistics received from a network element, or has to determine flow paths without forecasted impending congestions on the basis of congestion forecasts received from other entities.

In some embodiments, link capacity usage and data flow statistics comprise the link capacity usage of the current data flows in a link section, the number of current data flows in the link section, the respective time the first package of a data flow arrives at the link section, also called birth time, and the respective time the last package of a data flow departs from the link section, also called death time. For example, the number of current data flows in a link section may be measured by implementing counters for each port into a network element. A counter may be increased once a first package of a data flow is sent into a link and decreased once the last package of the data flow was sent into a link.

On the basis of this data one may forecast link congestion. In some embodiments, link congestion may be forecasted by using an algorithm comprising the following steps:

In a first step one may determine the average link capacity usage per data flow, for example by dividing the currently used link capacity by the number of the running flows on the link. As a result one receives the arithmetic average of the capacity usage per flow. One may also use the weighted average or use other averaging procedures for determining average values. The result is assumed to be the capacity of the next arriving flow.

In a second step one may determine the average lifetime of the data flows. The lifetime of a data flow is herein defined as the difference of birth and death time of the data flow. One possibility to obtain the average flow lifetime is to summarize the lifetimes of a number of recent flows and divide the sum by the number of flows that contributed to the sum. The result is the arithmetic average of the flow lifetimes. A different averaging procedure may be used here as well.

In a third step one may determine the average inter-arrival time of two consecutive data flows at the link. The inter-arrival time is herein defined as the difference of the birth times of two flows arriving consecutively at a link section. To obtain the average inter-arrival time one may again use arithmetic averaging or other averaging procedures.

Assuming that the next data flow will arrive at a time that is the present time plus the previously determined average inter-arrival time, the link capacity that is used by flows present in the link at the estimated time the next data flow will arrive may be determined. For example, one may assume that the currently running flows will have a lifetime that complies with the previously determined average lifetime of data flows. Since the birth time of each flow is known, the number of flows that will no longer be present in the link at the time the next data flow arrives may be estimated.

Assuming that the link capacity usage of these flows also complies with the previously determined average link capacity usage per data flow, the link capacity that becomes free due to the dying of these flows may be determined. The used capacity of the link at the estimated time a next data flow will arrive may be determined by subtracting the previously determined capacity that becomes free due to the dying of the flows from the currently used link capacity. Since the maximum capacity of the link as well as the estimated used capacity of the link at the estimated time the next data flow will arrive is well known, the estimated free link capacity at the time the next data flow will arrive may be determined.

If this free link capacity is less than the previously determined average link capacity usage per data flow, a determination may be made that a next incoming flow will cause link congestion.

If determination is made that the next incoming data flow will cause link congestion, the respective link may be flagged as "endangered to suffer congestion" and may be excluded from the flow path of the next incoming flow.

This algorithm may have the advantage that is of a low operational complexity such that it does not significantly reduce the performance of the entity that conducts the congestion forecast. Furthermore, measurement of the link capacity usage and data flow statistics may be conducted with a time period long enough to avoid unnecessary control traffic and performance degradation of the network elements. Thus it is possible to forecast congestion in the network elements of a computer network without significant degradation of the network performance in regard to flow forwarding.

In some embodiments, the network elements are being sub-divided into domains. Each domain comprises a subset of the plurality of network elements and thus forms a partial topology of the network. Furthermore the domains comprise remote control entities, capable of manipulating the network elements of the respective domain and thus managing their data flow forwarding behavior. Remote control of the flow forwarding behavior of the network elements by the control entity may be achieved by connecting the control entity to each of the network elements using a separate set of network links, or by connecting the control entity to the network itself and allowing the control entity to communicate with the network elements using the common network links.

Sub-dividing the plurality of network elements into domains and introducing a remote control entitiy may have the advantage that the remote control entity is capable of creating a general map of the network elements wherein the map comprises information about the load status and possible impending congestions of the links. Thus, a flow path set up by the control entity of the network domain may circumvent potential dead ends in the network which could not be identified if a congestion forecast would be carried out locally and the result of the forecast would only be reported to the neighboring network elements.

The control entity as described above is to be understood as a logical element. Therefore the control entity may contain a plurality of physical elements, such as for example computers, wherein these physical elements are not necessarily situated within the network domain.

In some embodiments, the control entity of a network domain uses the open flow protocol for manipulating the network elements. Using the Open Flow protocol may enable the control entity to react to the appearance and disappearance of network elements in the respective domain.

In some embodiments, the network domains further comprise at least one database. The remote control entity of a network domain is connected to the respective database and is capable of accessing the data comprised in the database. The link capacity usage and data flow statistics of the network elements are being forwarded to the control entity. The control entity may either directly conduct the congestion forecast on the basis of the previously received data, or store the data in the database for later use. As a result the control entity may conduct the forecast of impending link congestion for each network element of the domain, determine a path for a next data flow only including network elements without a previously forecasted impending congestion and direct the data flow along said path either using newly received data or using data that has previously been stored. Using a database for storing the link capacity usage and data flow statistics and connecting the remote control entity the database may have the advantage, that all the flow forwarding control functionalities are comprised within a single entity and additionally the control entity may either conduct a congestion forecast on demand using data stored in the database or conduct congestion forecast instantly upon receiving the link capacity usage and data flow statistics. The frequency of measurements conducted by the network elements may be adjusted in such a way, that no unnecessary control traffic occurs.

Furthermore the frequency of congestion forecast of the control entity may be adapted to the performance of the control entity such that performance degradation of the control entity is mitigated. The database does not necessarily have to be separate from the control entity. It is also possible to include the database into the control entity. As a result the database does not even have to be situated within the network domain, as long as the database is logically connected to the control entity, and the control entity is logically connected to the network elements.

In some embodiments, the method for forwarding data flows further comprises a communication between the control entities of adjacent domains. In this context adjacent means that the two domains share at least one link between their respective network elements. Thus a transfer of a data flow from one domain to the other domain is possible.

Upon arrival of a data flow at a domain edge the control entity of the respective domain sends a notification to the control entity of the adjacent domain. The notification comprises information about the destination address of the data flow and about the previously determined average link capacity usage of the most recent flows which is assumed to be the link capacity usage of the new data flow. Upon receiving the aforementioned notification the control entity of the adjacent domain may determine whether a path within the respective domain only including links without impending congestions can be provided. Determining whether a path can be provided may either be done by looking up a previously determined network load status or by conducting a new forecast of impending congestions on the basis of the flow capacity usage and data flow statistics of the network elements and checking whether a suitable path without impending congestion exists.

If the control entity asserts that a path without impending congestion can be provided, the control entity manipulates the affected network elements in such a way that the data flow will be forwarded along the previously determined path upon arrival at the domain of the control entity. In addition the control entity sends a notification back to the control entity of the domain where the flow path has arrived, the notification comprising the acknowledgement that a path without congestion can be provided. Thus the data flow may be forwarded to the adjacent domain.

If the control entity of the adjacent domain asserts that a flow path without an impending congestion cannot be provided, either the control entity of the previously addressed domain or the control entity of the domain where the data flow arrived may enquire, whether the control entities of other adjacent domains can provide a path within their domains that does not include network elements with an impending congestion. If a third control entity also cannot provide a flow path without an impending congestion the control entity of yet another adjacent network domain has to be addressed whether a path without congestion can be provided and so forth. Upon the detection of a network domain that is capable of properly forwarding the data flow, the control entity of the network domain where the data flow arrived may be allocated to forward the data flow to the domain capable of properly forwarding the data flow.

This may have the advantage that no data flow will be forwarded to a network domain not capable of handling the data flow in regard to providing a flow path without impending congestions. As a result no path computation efforts are wasted. In addition the adjacent network domain may check whether existing flow paths are suited for forwarding of an incoming data flow and set up the network elements of the respective domain for proper forwarding of the incoming data flow prior to the arrival of the data flow at the domain edge. Thus forwarding delays caused by antecedent path computation and manipulation of the network elements may be minimized.

In some embodiments, the method further comprises storing of previously used and newly determined flow paths to a database by the control entity of a domain. Upon being asked to provide a path for a data flow the control entity first checks the database whether a path with the required destination address that does not include links with a previously forecasted impending congestion already is comprised in the database. If no such path is comprised in the database the control entity determines a new path. Storing flow paths to a database may have the advantage that in most cases no new path has to be computed and thus the response time between requesting a path by the network elements and providing a path by the control entity is minimized. In addition no computation resources are wasted in calculating a flow path that has been used beforehand.

In some embodiments, the method further comprises a refinement of the paths comprised in the database by the control entity if the control entity possesses unused computation resources. Said refinement may include deciding to use other links in a flow path according to newly found impending link congestions, or may include load balancing between the network links to prevent congestions. Refinement of flow paths once the control entity possesses unused computation resources may have the advantage that no computation resources are wasted and upon being asked to provide a flow path the database may offer paths that have been optimized in regard to quality of service and congestion avoidance. In addition an efficient load balancing may prevent congestions.

In some embodiments, a computer program product comprising computer executable instructions adapted to perform the method as described above is provided.

In some embodiments, a network system comprising a plurality of network links is provided, wherein the network system is adapted for forwarding a data flow while avoiding a congestion along a flow path, prior to the emergence of the congestion, wherein the data flow is defined as a sequence of data packets with the same destination address (120), the flow path comprising a subset of the plurality of network links, the network system being configured to:
- determine a plurality of statistics, the plurality of statistics representing link capacity usage and data flow characteristics of at least a plurality of the network links, the characteristics comprising an available link capacity at an estimated time a next data flow arrives at a link and an average link capacity usage per data flow,
- for each of at least a plurality of the network links, forecast an impending congestion condition on the basis of the respective link capacity usage and data flow characteristics, based on comparing the respective estimated available link capacity at the respective estimated time a next data flow arrives (207) with the respective average link capacity usage per data flow, and
- direct the next data flow along a path preferably only comprising links without a respective forecasted impending congestion condition.

In some embodiments a network element capable of forwarding a data flow is provided, wherein the data flow is defined as a sequence of data packets with the same destination address, the network comprising a plurality of network elements, the network element being configured to:
- determine a plurality of link capacity usage and data flow statistics of the network element,
- forward the link capacity usage and dataflow statistics to a control entity,
- in response to forwarding the link capacity usage and data flow statistics, receive information to which link a next data flow is to be forwarded to, and
- direct the next data flow to the link.

In some embodiments a control entity for a network system comprising a plurality of network elements is provided, wherein the control entity is adapted for controlling a forwarding of a data flow while avoiding a congestion along a flow path in a network system, prior to the emergence of the congestion, the flow path comprising a subset of the plurality of network elements, the control entity being configured to:
- receive a plurality of link capacity usage and data flow statistics of a network element of the plurality of network elements,
- forecast impending congestion of a link of the network element on the basis of the link capacity usage and data flow statistics, by comparing an estimated available link capacity at an estimated time a next data flow arrives at the link with an average link capacity usage per data flow, and/or receive information on forecasted impending congestions of links of the network element,
- determining a flow path for the next data flow without impending link congestions using the forecasted impending congestions, and
- forward information on the determined flow path to the network elements, the information specifying to which link of the network element the next flow is to be forwarded to.

### Brief description of the drawings

In the following preferred embodiments of the invention are described in greater detail by way of example only making reference to the drawings in which:
- Fig. 1: is a schematic view of a network system comprising a plurality of network elements connected with links,
- Fig. 2: is a schematic view of a network system also comprising a plurality of network elements connected with links wherein one link has been flagged as being endangered to suffer congestion,
- Fig. 3: is a schematic view of a section of a link with a plurality of data flows passing through the section,
- Fig. 4: is a block diagram illustrating a method for forecasting congestions,
- Fig. 5: is a schematic view of a network system comprising a plurality of network elements connected with links and further comprising a remote control entity and a database wherein the network elements, the control entity and the database are part of the same domain,
- Fig. 6: is a schematic view of a network system wherein the network elements are sub-divided into three domains, each domain comprising a remote control entity,
- Fig. 7: is a diagram illustrating a method for determining which second domain a dataflow is to be forwarded to that has recently arrived at the domain edge of a first domain.

### Detailed Description

In the following similar elements are denoted by the same reference numerals.

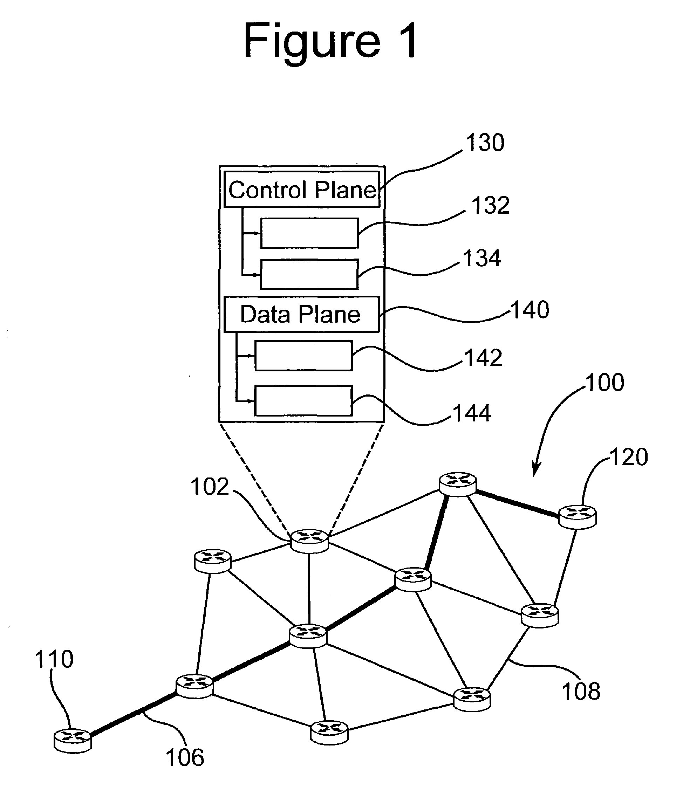

Fig. 1 is a schematic view of a network system 100 comprising a plurality of network elements 102 wherein the network elements 102 are interconnected with links 108. There are also two particular network elements 102 that are network element 110 which is in this case the source of a data flow and network element 120 which is the destination of the data flow. There are also a number of particular links 106 which may be identified by their enhanced line width. These represent the links included in the flow path, leading from the source 110 of the data flow to the destination 120 of the data flow. The network elements 102 comprise a control plane 130 and a data plane 140.

The control plane 130 of a network element 102 is responsible for deciding how the network element responds to an incoming data flow in regard to the forwarding behavior. Therefore the control plane 130 decides how to handle incoming data flows 134. In the context of the present embodiment the control plane 130 also forecasts impending congestions 132 on the links 108 that are connected to the network element 102.

The data plane 140 of a network element 102 executes the decisions of the respective control plane 130. Thus it forwards data flows 144 on the basis of the flow forwarding decisions of the control plane 130. In the context of the present embodiment the data plane 140 further records data flow and link capacity usage statistics 142. Execution of the methods described herein may be performed by an apparatus (e.g., a network element or a network surveillance apparatus) comprising a memory or storage configured to store program code representing those methods and a processor programmed to execute those stored programs. It should be appreciated that when processor-executable programs are implemented on a processor, the program code combine with the processor to provide a unique device that operates analogously to specific logic circuits.

If a data flow has to be forwarded from network element 110 to network element 120 a flow path for the data flow has to be established. Usually the data plane 140 of network element 110 checks whether information is comprised in the network element 110 on which adjacent network element 102 a data flow with the destination address of network element 120 has to be forwarded to. For example this may be done by looking up a flow forwarding table comprised in the network element 110. The flow forwarding table comprises information on which adjacent network element 102 a data flow with a certain destination address 120 has to be forwarded to. If such information can be found, the data plane 140 arranges for the data flow to be forwarded to the respective network element 102. If no such information can be found, the control plane 130 of the network element 110 has to determine a flow path for the data flow for example by enquiring whether an adjacent network element 102 knows the destination address 120 and if so allocating the data plane 140 to forward the data flow to the network element 102 that responded with an ACK. By repeating this procedure an end-to-end flow path from network element 110 to network element 120 may be established.

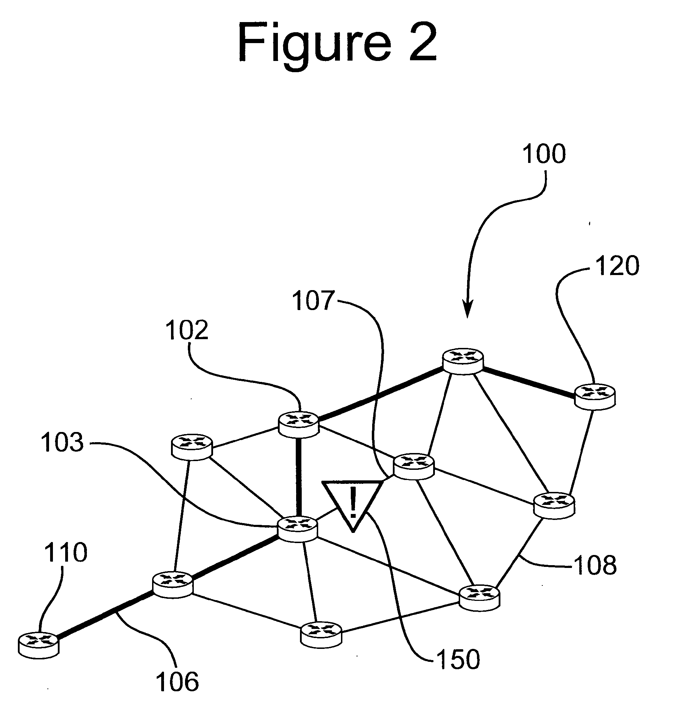

Fig. 2 is a schematic view of a network system 100 comprising a plurality of network elements 102 interconnected with links 108 wherein for one link 107 an impending congestion 150 has been detected. As a result the end-to-end flow path 106 from network element 110 to network element 120 has to be redirected such that the flow path only includes links 108 without an impending congestion. As described above in Fig. 1 a data flow has to be forwarded from network element 110 to network element 120. The forwarding decisions made for setting up the path from network element 110 to network element 103 are the same as described above. Yet in this case the control plane 130 of network element 103 determined that link 107 is about to be congested and as a result flagged 150 the link 107 as being endangered to suffer congestion. Thus the control plane 130 of network element 103 told the data plane 140 of network element 103 not to forward a data flow along link 107 for example by modifying the flow forwarding table of the network element, such that link 107 is no longer comprised in the forwarding decisions comprised in the flow forwarding table. As a result the data plane 140 of network element 103 forwards the data flow to another network element 102 and in consequence a new flow path is being used that does not include the link 107 previously determined as being endangered to suffer congestion.

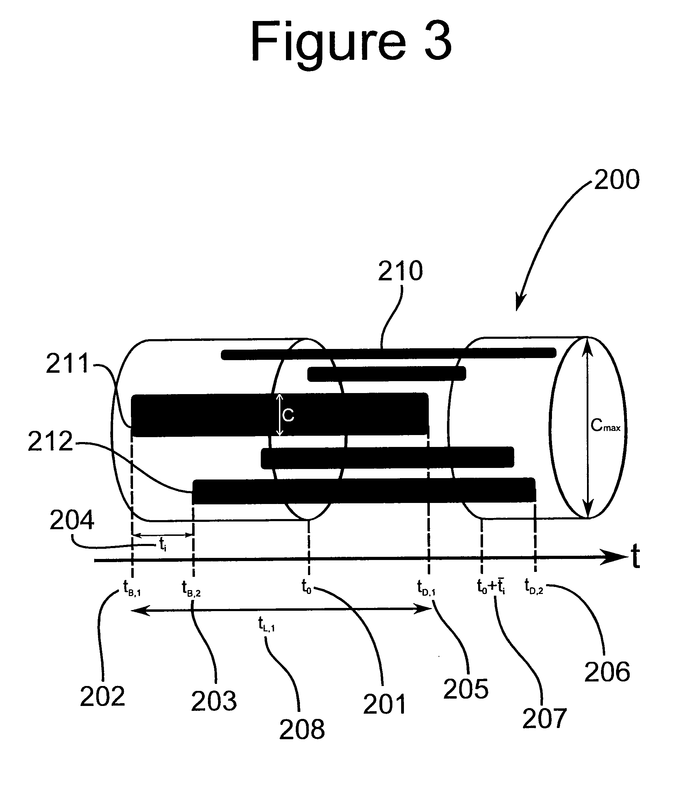

Fig. 3 is a schematic view of a link section 200 wherein a plurality of data flows 210 is passing through the link section 200. The data flows 210 are herein represented by bars with different vertical thickness. The section of a link 108 is represented by a pipe-like object, with diameter cₘₐₓ, representing the maximum capacity of the link 108 Note that the horizontal axis of the drawing represents the time. As an example two data flows 211 and 212 that arrived consecutively at the link section 200 are depicted. A data flow 211 is characterized by its birth time 202, its death time 205 and its link capacity usage c which may be understood as the vertical width of the data flow 211.

To obtain the inter-arrival time 204 of flows 211 and 212 one has to subtract the birth time 202 of flow 211 from the birth time 203 of flow 212. By calculating the inter-arrival time for all pairs of data flows which have arrived consecutively at the link section one may determine the average inter-arrival time of the data flows. To obtain the lifetime 208 of flow 211 one has to subtract the birth time 202 of flow 211 from the death time 205 of flow 211. By calculating the lifetime of each data flow one may determine the average lifetime of flows passing through the link section.

Assuming that the next data flow will arrive at a time 207 that is the present time 201 plus the previously determined average inter-arrival time one may determine an estimated free link capacity at the time 207 as described above. In this picture the available link capacity is represented by the horizontal space within the link section not used by one of the data flows.

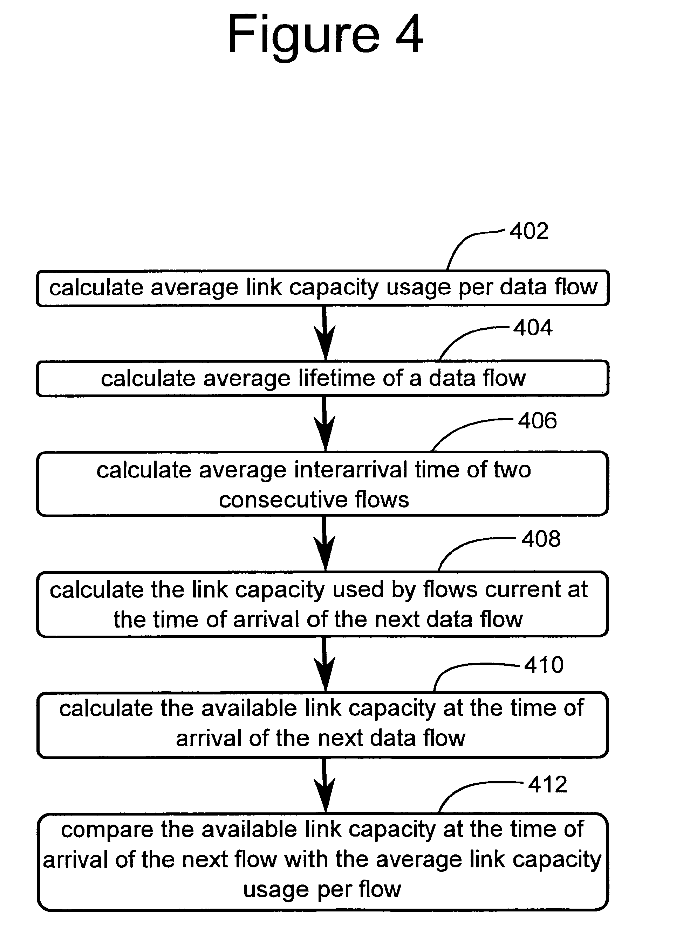

Fig. 4 is a block diagram illustrating a method for forecasting congestions. In a first step 402 the average link capacity usage per dataflow is being determined. This may for example be done by dividing the currently used link capacity by the number of flows current in the link. For the following steps it is assumed that a next incoming dataflow will have a link capacity usage that complies with the previously determined average link capacity usage per dataflow.

In a second step 404 the average lifetime of a dataflow is being determined. To obtain the lifetime of a dataflow one has to subtract the birth time of the dataflow from the death time of the dataflow. The average lifetime may then be obtained by summarizing the lifetimes of a number of data flows that have recently passed through a link section and dividing the sum by the number of dataflows that contributed to the sum.

In a third step 406 the average inter-arrival time of two consecutive data flows is being determined. To obtain the inter-arrival time of two consecutive data flows one has to subtract the birth times of two data flows that arrived consecutively at a link section. To obtain the average inter-arrival time of two consecutive data flows one has to summarize the inter-arrival times of a number of data flows that arrived recently at the link section and divide the sum by the number of data flows that contributed to the sum reduced by one.

Determining the average values as described above may also be carried out by using other averaging procedures than the arithmetic average such as the weighted, geometric or harmonic average.

In a fourth step 408 the link capacity used by dataflows current in the link section at the time of arrival of the next dataflow is being determined. The time of arrival of the next dataflow is assumed to be the present time plus the previously determined average inter-arrival time of two consecutive data flows. Knowing the birth times of the dataflows current in the link section at the present time one may estimate the number of dataflows that will have died at the estimated time of arrival of the next dataflow by assuming that their lifetime will comply with the previously determined average lifetime of dataflows. Further assuming that the dataflows that will have died at the time of arrival of the next dataflow also match the previously determined average link capacity usage per dataflow one may determine the link capacity that becomes free due to the dying of the dataflows. Knowing the currently used link capacity one may therefore determine the link capacity used by dataflows current at the time of arrival of the next dataflow by subtracting the previously determined link capacity that becomes free due to the dying of dataflows from the currently used link capacity.

In a fifth step 410 the available link capacity at the time of arrival of the next dataflow is being determined. This may be done by subtracting the previously determined link capacity used by flows current at the time of arrival of the next dataflow from the maximum capacity of the link.

In a sixth step 412 the available link capacity at the time of arrival of the next dataflow is being compared with the average link capacity usage per dataflow. If the average link capacity usage per dataflow is greater than the available link capacity at the time of arrival of the next dataflow an impending congestion has been detected.

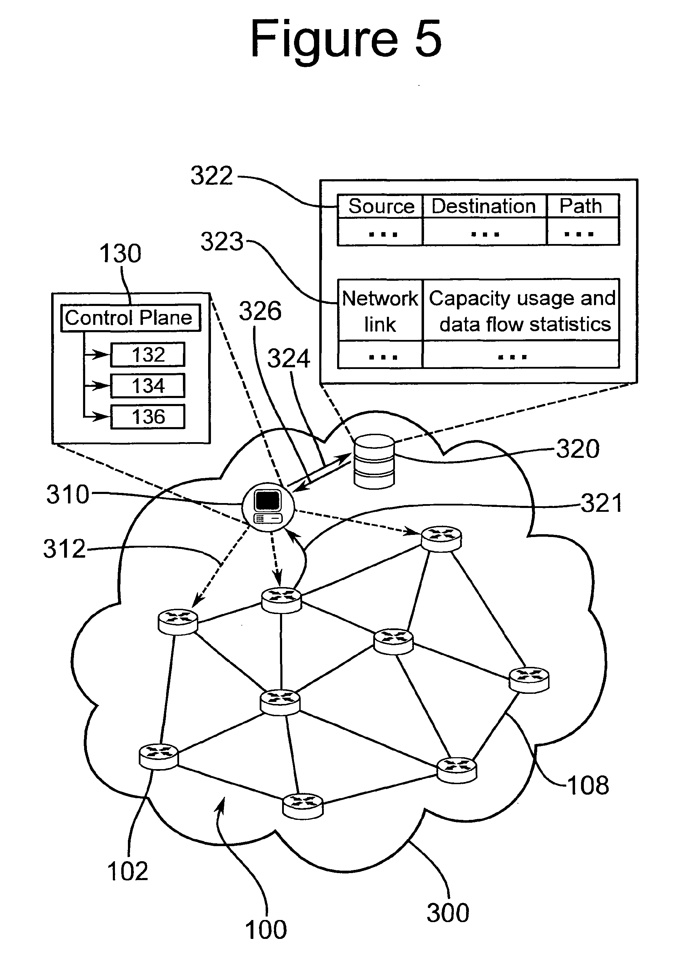

Fig. 5 is a schematic view of a computer network 100 comprising a plurality of network elements 102 interconnected with links 106 wherein the network further comprises a remote control entity 310 and a database 320 wherein the network elements 102, the remote control entity 310 and the database 310 are part of the same domain 300, indicated by a cloud-like border. The remote control entity 310 may comprise a number of processors with memory, adapted to perform the various methods as described in the summary and is capable of manipulating 312 the network elements 102. The control entity 310 further has access 324 to the database 320. The network elements 102 forward their link capacity usage and data flow statistics 321 to the control entity 310. The database 320 provides flow paths 326 to the control entity 310. The database 320 comprises a table comprising flow paths 322 and a table comprising the link capacity usage and data flow statistics of the network elements 323 previously stored to the database by the control entity. The control entity 310 comprises a control plane 310 comprising means for forecasting impending congestions 132, means for path computation 134 and means for path refinement 136.

As described previously the network elements 102 measure link capacity usage and data flow statistics comprising a flow count, the link capacity usage of the data flows as well as the birth and death times of the data flows. This dataset 321 is being forwarded to the control entity 310. The control entity either conducts congestion forecast on the basis of said dataset or stores 324 the dataset to the database 320. The datasets 323 comprised in the database are being kept up to date by repeated measurement with a time period long enough to avoid unnecessary traffic and performance degradation of the control entity 310 or the network elements 102. The control entity 310 may access 324 the datasets 323 comprised in the database 320 to conduct congestion forecast on the basis of previously measured link capacity usage and data flow statistics 323.

A forecast of link congestion may for example either be done on demand every time a new data flow arrives at the domain edge or with a predefined time period. As a result the control entity 310 is capable of creating something like a map of the network elements that belong to the controller's domain wherein the map comprises information on the load status of the links 106, that is whether the links have impending congestions or not. Once the control entity 310 determines an impending congestion of a link 106 it manipulates 312 the network elements 102 that are connected with the link 106 in such a way that the network elements do not forward data flows along the endangered link 106. Once the control entity 310 has determined a flow path with a certain destination address taking into account the current load status of the network links 106, the control entity may store the newly found flow path 324 to the database 320.

As a result the database 320 also comprises a table 322 comprising routing information for certain combinations of source and destination addresses. Upon being asked to provide a flow path for a certain combination of source and destination address, the control entity 310 may then first check the database 320 whether an adequate flow path already exists and only if no such path is comprised in the database 320 the control entity 310 has to conduct a new path computation. If new network elements are being added to the domain 300 the control entity 310 is being informed about the new network elements and may then include the new network elements into the path computations.

If the control entity has unused computation resources available it may refine 136 the flow paths comprised in the database 320 taking into account the current load status of the network links 106. As a result the time delay between being asked to provide a flow path and providing the flow path is minimized which results in very efficient routing.

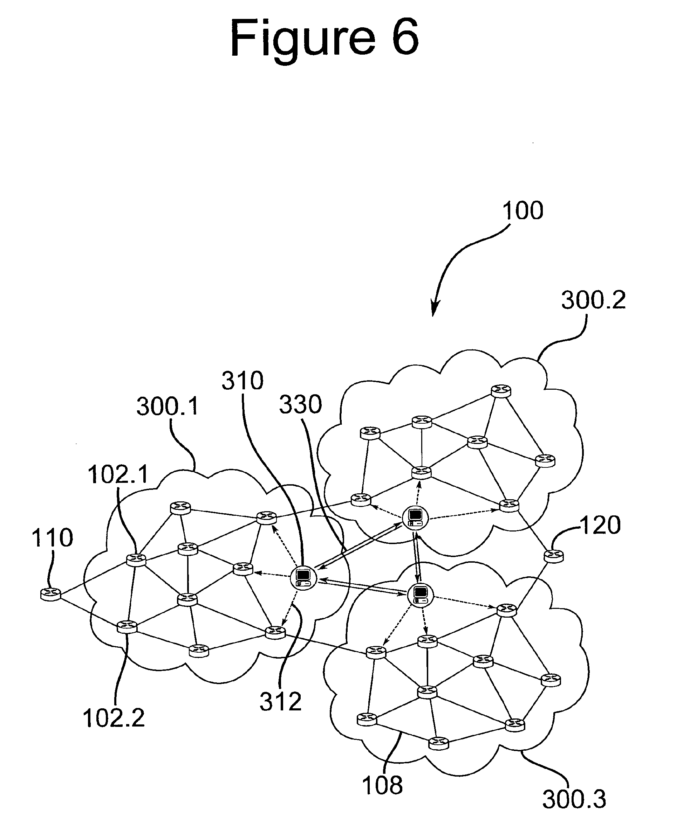

Fig. 6 is a schematic view of a network system 100 comprising a plurality of network elements 102 interconnected with links 106 wherein the plurality of network elements is subdivided into three domains 300.1, 300.2 and 300.3. Each domain comprises a remote control entity 310. For an easier understanding of the fundamental principles of the described embodiment the network element 110 which is the source of the data flow and the network element 120 which is the destination of the data flow are comprised in neither of the domains. The control entities 310 of the domains are enabled to communicate 330 for example by linking them up with glass fiber cables. As described previously the control entities 310 are capable of manipulating 312 the network elements 102 of their respective domain. The domains are also connected by means of at least one link between their respective network elements.

Once a data flow originating from network element 110 arrives at the domain edge of domain 300.1 the network elements 102.1 or 102.2 notify the control entity 310 of the domain 300.1 of the arrival of the new data flow.

The notification comprises the destination address 120 of the data flow and its forecasted link capacity usage. The control entity 310 of domain 300.1 now has to decide which adjacent domain the new data flow has to be directed to. To do so the control entity of domain 300.1 sends a notification 330 to the control entity 310 of the domain 300.2, the notification comprising the destination address 120 and the forecasted link capacity usage of the newly arrived data flow. The control entity 310 of domain 300.2 then checks whether the destination address 120 is known and whether a path with this destination address not including network links 108 that have previously been forecasted as being endangered to suffer congestion can be provided.

If such a path can be provided the control entity 310 of domain 300.2 sends a notification to the control entity 310 of domain 300.1, the notification comprising the acknowledgement that the data flow may be forwarded to domain 300.2 without risking link congestion. If the remote control entity 310 of domain 300.2 figures out that no flow path without impending congestions can be provided it also sends a notification 330 to the control entity 310 of domain 300.1, the notification comprising the information that the data flow should not be forwarded to domain 300.2. As a result another domain being connected with domain 300.1 has to be found whose controller knows the destination address 320 of the data flow. In the case as described here the domain 300.3 is also connected with the domain 300.1. Either the control entity 310 of domain 300.1 or the control entity 310 of domain 300.2 enquire 330 whether the remote control entity 310 of domain 300.3 can provide a flow path with the destination 120 that does not include links with impending congestions.

As described before the remote control entity 310 of domain 300.3 checks its network load status and depending on those findings responds with an acknowledgement or rejection. The previously described procedure is repeated until a suitable adjacent network domain is found that can provide a flow path with destination address 120 that does not include links with impending congestions. Upon finding such a domain the control entity 310 of domain 300.1 manipulates the network elements of the respective domain in such a way that the data flow is being forwarded to the previously determined domain. Furthermore the control entity 310 of the adjacent domain 300.3 also sets up the network elements of the respective domain such that the data flow is properly forwarded. As a result the forwarding of a data flow towards a domain that does not possess sufficient free link capacity is being prevented and as a result no path computation efforts are wasted.

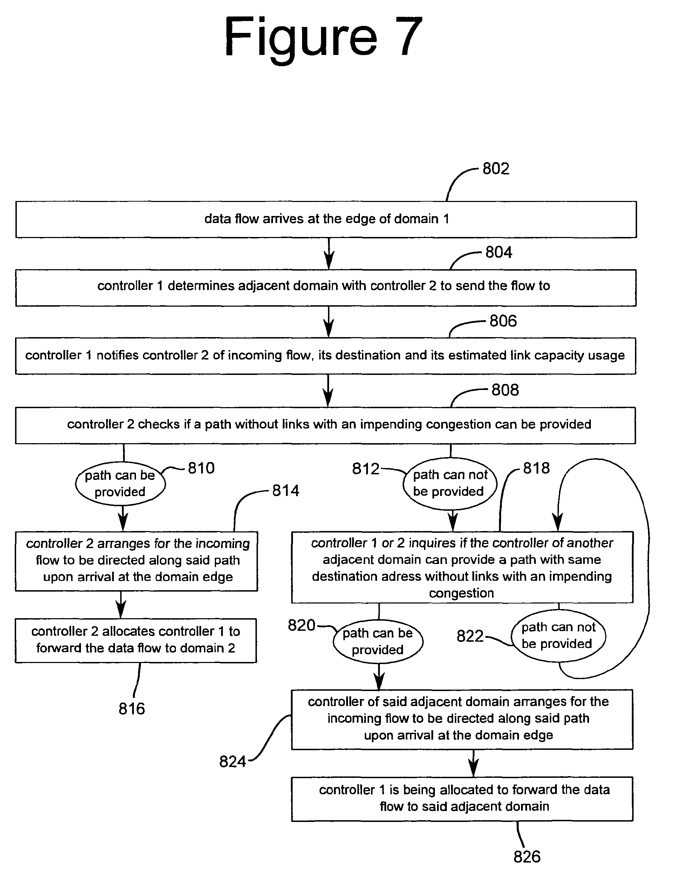

Fig. 7 is a diagram illustrating a method for determining which second domain a dataflow that has recently arrived at the domain edge of a first domain is to be forwarded to. In a first step a dataflow arrives at the edge of domain 1 802. If the destination address of the dataflow is not within domain 1 the controller of domain 1 has to determine an adjacent domain to send the flow to 804 for further forwarding of the data flow. Upon having identified such an adjacent domain 2, the controller of domain 1 sends a notification to the controller of said domain 2, the notification comprising the destination address of the dataflow and the estimated link capacity usage of the dataflow 806. As a result the controller of domain 2 checks whether a flow path, suitable for the data flow destination address within domain 2 without links with an impending congestion can be provided 808. Now there are two possibilities:

In case the controller of domain 2 finds out that such a flow path can be provided 810 it arranges for the incoming dataflow to be directed along said path upon arrival at the edge of domain 2 814. In addition the controller of domain 2 allocates the controller of domain 1 to forward the dataflow to domain 2 816.

In case the controller of domain 2 finds out that a flow path without impending congestions cannot be provided 812, either the controller of domain 2 or the controller of domain 1enquires whether the controller of another adjacent domain can provide a flow path with the same destination address and without links with an impending congestion 818. If it turns out that another adjacent domain can provide a flow path without impending congestions 820 the controller of said adjacent domain arranges for the incoming dataflow to be directed along said path upon arrival at the domain edge 824. The controller of domain 1 is then being allocated to forward the dataflow to said adjacent domain 826. If the controller of the adjacent domain replies that a path without impending congestions cannot be provided 822 another adjacent domain whose controller knows the destination address and can provide a path without impending congestion has to be found. This may for example be accomplished by repeated enquiry by the controller of domain 2 as described above in step 818.

### List of Reference Numerals

| | |
|---|---|
| 100 | Computer network |
| 102 | Network element |
| 103 | Network element |
| 106 | Link |
| 107 | Link |
| 108 | Link |
| 110 | Network element |
| 120 | Network element |
| 130 | Control plane |
| 132 | Forecasting congestions |
| 134 | Flow path computation |
| 136 | Path refinement |
| 140 | Data plane |
| 142 | Recording statistics |
| 144 | Flow-forwarding |
| 150 | Flag for impending congestion |
| 200 | Link section |
| 201 | Current time |
| 202 | Birth time of data flow 1 |
| 203 | Birth time of data flow 2 |
| 204 | Inter-arrival time of data flows 1 and 2 |
| 205 | Death time of data flow 1 |
| 206 | Death time of data flow 2 |
| 207 | Estimated time of arrival of the next data flow |
| 208 | Lifetime of data flow 1 |
| 210 | Data flow |
| 211 | Data flow |
| 212 | Data flow |
| 300 | Network domain |
| 310 | Remote control entity |
| 312 | Manipulating network elements |
| 320 | Database |
| 321 | Forwarding data flow statistics |
| 322 | Flow path table |
| 323 | link and data flow statistics |
| 324 | Accessing database |
| 326 | Providing flow paths |
| 330 | Communication between control entities |

## Claims

1. A method for forwarding a data flow (210) in a computer network (100) while avoiding a congestion along a flow path, prior to the emergence of the congestion, wherein the data flow is defined as a sequence of data packets with the same destination address (120), the network comprising a plurality of network links (108), the flow path comprising a subset of the plurality of network links, the method comprising:
- determining a plurality of statistics, the plurality of statistics representing link capacity usage and data flow characteristics of at least a plurality of the network links, the characteristics comprising an available link capacity at an estimated time a next data flow arrives at a link and an average link capacity usage per data flow,
- for each of at least a plurality of the network links, forecasting an impending congestion condition on the basis of the respective link capacity usage and data flow characteristics, based on comparing the respective estimated available link capacity at the respective estimated time a next data flow arrives (207) with the respective average link capacity usage per data flow, and
- directing the next data flow along a path preferably only comprising links without a respective forecasted impending congestion condition.

2. A method for forwarding a data flow (210) in a computer network (100),
wherein the data flow is defined as a sequence of data packets with the same destination address (120), the network comprising a plurality of network elements (102), the method comprising at a network element of the plurality of network elements:
- determining a plurality of link capacity usage and data flow statistics of the network element,
- forwarding the link capacity usage and dataflow statistics to a control entity,
- in response to forwarding the link capacity usage and data flow statistics, receiving information to which link a next data flow is to be forwarded to, and
- directing the next data flow to the link.

3. A method for forwarding a data flow (210) in a computer network (100) while avoiding a congestion along a flow path, prior to the emergence of the congestion, wherein the data flow is defined as a sequence of data packets with the same destination address (120), the network comprising a plurality of network elements (102), the flow path comprising a subset of the plurality of network elements, the method comprising at a control entity:
- receiving a plurality of link capacity usage and data flow statistics of a network element of the plurality of network elements,
- forecasting impending congestion of a link of the network element on the basis of the link capacity usage and data flow statistics, by comparing an estimated available link capacity at an estimated time a next data flow arrives (207) at the link with an average link capacity usage per data flow,
- determining a flow path for the next data flow without impending link congestions using the forecasted impending congestions, and
- forwarding information on the determined flow path to the network elements, the information specifying to which link of the network element the next flow is to be forwarded to.

4. The method of claim 3, wherein the link capacity usage and data flow statistics comprise at least one link capacity usage of the data flows current in the link, a number of data flows current in the link, a respective time the first package of a data flow arrives at the link (202) and a respective time the last package of a data flow departs from the link (205), the forecasting of link congestion further comprising:
- determining the average link capacity usage per data flow,
- determining the average life time of a data flow in the link, wherein the lifetime (208) of a data flow is defined as the difference of the time the first package of the data flow arrives at the link, and the time the last package of the data flow departs from the link,
- determining the average inter-arrival time of two consecutive data flows at the link, wherein the inter-arrival time (204) is defined as the difference of the times of arrival of two data flows arriving consecutively at the link,
- determining the link capacity used by the flows present in the link at the estimated time the next data flow arrives at the link, wherein the estimated time of arrival of the next data flow is assumed to be the present time (201) plus the previously determined average inter-arrival time,
- determining the link capacity not used by flows current at the estimated time the next data flow arrives, and
- signaling an impending congestion in a link if the link capacity not used by flows current at the time the next data flow arrives is less than the average link capacity usage per data flow.

5. The method as described in one of the claims 3-4, wherein the network elements are subdivided into domains (300), each domain comprising a remote control entity (310) for managing the data flow forwarding of the network elements belonging to the network domain by manipulating (312) the network elements.

6. The method as described in claim 5, wherein the control entity uses the Open Flow protocol for the manipulation of the network elements.

7. The method as described in claim 5 or 6, the domains further comprising at least one database (320), wherein the link capacity usage and data flow statistics of the network elements are being forwarded (321) to the control entity of the respective domain and/or to the at least one database, wherein the remote control entity of a network domain is connected to at least one of the databases belonging to the domain of the remote control entity, the control entity accessing the data comprised in the database (324), forecasting impending link congestion for the network elements of the domain, calculating a path for a next data flow only including network elements without a previously forecasted impending congestion and directing the data flow along the path according to the method steps as described in any of the previous claims.

8. The method as described in any of the previous claims 5- 7, wherein, upon arrival of a data flow at a domain edge the control entity of the domain sends a notification to the control entity of an adjacent domain (330), wherein the notification comprises information about the destination address of the newly arrived data flow and the forecasted link capacity usage of the data flow, the method further comprising:
- determining by the control entity of the domain, that has been notified of the arrival of the new data flow, whether a path within the domain only including links without a previously forecasted impending congestion, can be provided,
- if a path only comprising links without a previously forecasted impending congestion can be provided, manipulating the affected network elements of the domain according to the above claims,
- if a path only comprising links without a previously forecasted impending congestion cannot be provided, enquiring whether the control entities of the adjacent network domains can provide a path within their respective domain, the path having with the same data flow destination address and not including links with a previously forecasted impending congestion, and
- allocating the control entity of the domain where the new data flow arrived to forward the new data flow to the domain previously determined as being capable of providing a path with the data flow destination address and not including links with a previously forecasted impending congestion.

9. The method as described in any of the previous claims 5-8, wherein the control entity of a domain stores previously used and newly determined flow paths in the database and upon being asked to provide a path for a data flow first checks the database whether a path with the desired destination address, that does not include network elements with a previously forecasted impending congestion already is comprised in the database (326) and if no such path is comprised in the database, the control entity determines a new path according to the above claims.

10. The method as described in any of the previous claims 7-10, wherein the
control entity refines paths comprised in the database if the control entity possesses unused computation resources.

11. A computer program product comprising computer executable instructions
adapted to perform the method steps defined in any of the above claims.

12. A network system comprising a plurality of network links (108), wherein the
network system is adapted for forwarding a data flow (210) while avoiding a congestion along a flow path, prior to the emergence of the congestion, wherein the data flow is defined as a sequence of data packets with the same destination address (120), the flow path comprising a subset of the plurality of network links, the network system being configured to:
- determine a plurality of statistics, the plurality of statistics representing link capacity usage and data flow characteristics of at least a plurality of the network links, the characteristics comprising an available link capacity at an estimated time a next data flow arrives at a link and an average link capacity usage per data flow,
- for each of at least a plurality of the network links, forecast an impending congestion condition on the basis of the respective link capacity usage and data flow characteristics, based on comparing the respective estimated available link capacity at the respective estimated time a next data flow arrives (207) with the respective average link capacity usage per data flow, and
- direct the next data flow along a path preferably only comprising links
without a respective forecasted impending congestion condition.

13. A network element capable of forwarding a data flow, wherein the data flow is
defined as a sequence of data packets with the same destination address (120), the network comprising a plurality of network elements (102), the network element being configured to:
- determine a plurality of link capacity usage and data flow statistics of the network element,
- forward the link capacity usage and dataflow statistics to a control entity,
- in response to forwarding the link capacity usage and data flow statistics, receive information to which link a next data flow is to be forwarded to, and
- direct the next data flow to the link.

14. A control entity for a network system comprising a plurality of network elements, wherein the control entity is adapted for controlling a forwarding of a data flow while avoiding a congestion along a flow path in a network system, prior to the emergence of the congestion, the flow path comprising a subset of the plurality of network elements, the control entity being configured to:
- receive a plurality of link capacity usage and data flow statistics of a network element of the plurality of network elements,
- forecast impending congestion of a link of the network element on the basis of the link capacity usage and data flow statistics, by comparing an estimated available link capacity at an estimated time a next data flow arrives (207) at the link with an average link capacity usage per data flow, and/or receive information on forecasted impending congestions of links of the network element,
- determining a flow path for the next data flow without impending link congestions using the forecasted impending congestions, and
- forward information on the determined flow path to the network elements, the information specifying to which link of the network element the next flow is to be forwarded to.
